# EUROPEAN PATENT APPLICATION

(11) **EP 4 796 899 A1**
(43) Date of publication of application: **26.08.2026**
(21) Application number: 26160383.1
(22) Date of filing: 24.02.2026
(51) Int. Cl.: G01C 21/36, B60K 35/21

(54) **METHOD FOR DISPLAYING NAVIGATION INFORMATION, DEVICE, MEDIUM AND PROGRAM PRODUCT**

(30) Priority: 24.02.2025 CN 202510209568
(71) Applicant: Volkswagen Group (China) Technology Company Limited, Hefei Anhui 230091 (CN)
(72) Inventor: HUANG, Suhong, Hefei, 2390091 (CN); YAN, Aobo, Hefei, 2390091 (CN); PAN, Fengmin, Hefei, 2390091 (CN)
(74) Representative: Zimmermann & Partner Patentanwälte mbB

(57) **Abstract**

The present disclosure relates to a method for displaying navigation information, a device, a medium, and a program product. The method includes generating (210) a real-time navigation interface according to a real-time scene ahead of a vehicle, where a virtual navigation route in the real-time navigation interface is fused with the real-time scene. The method further includes displaying (220) the real-time navigation interface using a display of the vehicle. Through the method provided in the present disclosure, a user is allowed to anticipate driving information in a short term, thereby improving driving safety. Furthermore, the method can further fuse the virtual navigation route with the real-time scene to realize virtual-reality fusion, thereby providing a more realistic and understandable navigation manner, and enhancing driving safety.

## Description

### FIELD

The present disclosure generally relates to the technical field of computers, and more specifically, to a method for displaying navigation information, a device, a medium, and a program product.

### BACKGROUND

In the field of vehicle driving, displays typically show speed, warning information, etc. Displays provide users with an intuitive way to obtain important driving information, making driving more convenient and efficient.

Vehicles may be equipped with a Head-Up Display (HUD), which may project important information directly onto a transparent surface in front of a driver, such as a windscreen of the vehicle or a dedicated small transparent screen. Additionally, the vehicles may be equipped with a central control display, which integrates multiple functions to provide convenience for drivers and passengers, enhances driving experience and intelligent level of the vehicles.

### SUMMARY

The embodiments of the present disclosure provide a method for displaying navigation information, a device, a medium, and a program product.

In a first aspect of the present disclosure, there is provided a method for method for displaying navigation information. The method includes generating a real-time navigation interface according to a real-time scene ahead of a vehicle, wherein a virtual navigation route in the real-time navigation interface is fused with the real-time scene. In addition, the method includes displaying the real-time navigation interface using a display of the vehicle.

In a second aspect of the present disclosure, there is provided an electronic device. The electronic device includes: a processor; and a memory coupled to the processor and having instructions stored thereon, the instructions when executed by the processor, cause the electronic device to implement the method provided in the first aspect of the present disclosure.

In a third aspect of the present disclosure, there is provided a computer-readable storage medium. The computer-readable storage medium has computer-executable instructions stored thereon, the computer-executable instructions when executed, cause a computer to implement the method provided in the first aspect of the present disclosure.

In a fourth aspect of the present disclosure, there is provided a computer program product tangibly stored on a non-transitory computer readable medium and including machine executable instructions that, when executed, cause a machine to implement the method provided in the first aspect of the present disclosure.

It would be noted that the Summary is provided to introduce some concepts in a simplified form that are further described below in the Detailed Description. The Summary is not intended to identify key features or essential features of the embodiments of the present disclosure, nor is it intended to be used to limit the scope of the present disclosure.

### BRIEF DESCRIPTION OF THE DRAWINGS

Through the following detailed description with reference to the accompanying drawings, the above and other objectives, features, and advantages of exemplary embodiments of the present disclosure will become more apparent. In the drawings:
Fig. 1 illustrates a schematic diagram of an exemplary application scenario of a method for displaying navigation information according to embodiments of the present disclosure;
Fig. 2 illustrates a flowchart of a method for displaying navigation information according to embodiments of the present disclosure;
Fig. 3 illustrates a schematic diagram of updating a navigation interface according to embodiments of the present disclosure;
Fig. 4 illustrates a schematic diagram of generating a real-time navigation interface according to embodiments of the present disclosure;
Fig. 5A illustrates a schematic diagram of a system for displaying navigation information according to embodiments of the present disclosure;
Fig. 5B illustrates a schematic diagram of generating a real-time navigation interface according to embodiments of the present disclosure;
Fig. 5C illustrates a schematic diagram of adjusting a real-time navigation interface according to embodiments of the present disclosure;
Fig. 6 illustrates a schematic diagram of an apparatus for displaying navigation information according to embodiments of the present disclosure; and
Fig. 7 illustrates a block diagram of a device that can implement some embodiments of the present disclosure.

In each drawing, the same or similar reference symbols refer to the same or similar elements.

### DETAILED DESCRIPTION OF EMBODIMENTS

Exemplary embodiments of the present disclosure are described more fully with reference to the accompanying drawings. However, the exemplary embodiments can be implemented in a plurality of forms and should not be construed as limited to the embodiments set forth herein; rather, these embodiments are provided to describe the present disclosure thoroughly and completely., and fully convey the concepts of the exemplary embodiments to those skilled in the art.

In the description of the embodiments of the present disclosure, the term "includes/comprises" and its variations should be understood as open-ended inclusions, i.e., "includes/comprises, but not limited to". Although terms such as first, second, third, etc., may be used herein to describe various components, these components should not be limited by such terms. These terms are employed to distinguish one component from another. Therefore, a first component discussed below may be referred to as a second component without departing from the teachings of the concepts of the present disclosure. As used herein, the term "and/or" and similar terms include any, several, and all combinations of the associated listed items. The flowcharts shown in the accompanying drawings are for illustrative purposes only and are not required to include all content and operations/steps, nor are they required to be executed in the order described.

An important application of head-up display technology is in navigation. In related technologies, developers may use a head-up display to show a current driving direction, such as simple immediate navigation information like turning left, going straight, or turning right. However, if a user wants to learn more about route information related navigation, for example to achieve driving anticipation, the user, expecting to know a driving route of a vehicle for next 50 meters, still need to look down at the central control display to read a virtual navigation route, which obviously reduces driving safety. If the central control display is used for navigation, it may only display abstract navigation information, which dose not facilitate the user to understand a navigation route.

To this end, the embodiments of the present disclosure provide a method for displaying navigation information. The method can fully utilize a real-time scene ahead of a vehicle, and use a display to display a virtual navigation route of a certain length, so as to allow a user to anticipate a driving route in a short term, thereby improving driving safety. Furthermore, the method can further fuse navigation information such as the virtual navigation route with the real-time scene to realize virtual-reality fusion, thereby providing a more realistic and understandable navigation manner, and enhancing driving safety.

The basic principles and several example implementations of the present disclosure is illustrated below with reference to the accompanying drawings. It should be understood that the exemplary embodiments are provided only to enable those skilled in the art to better understand and thereby implement the embodiments of the present disclosure, and are not intended to limit the scope of the present disclosure in any way.

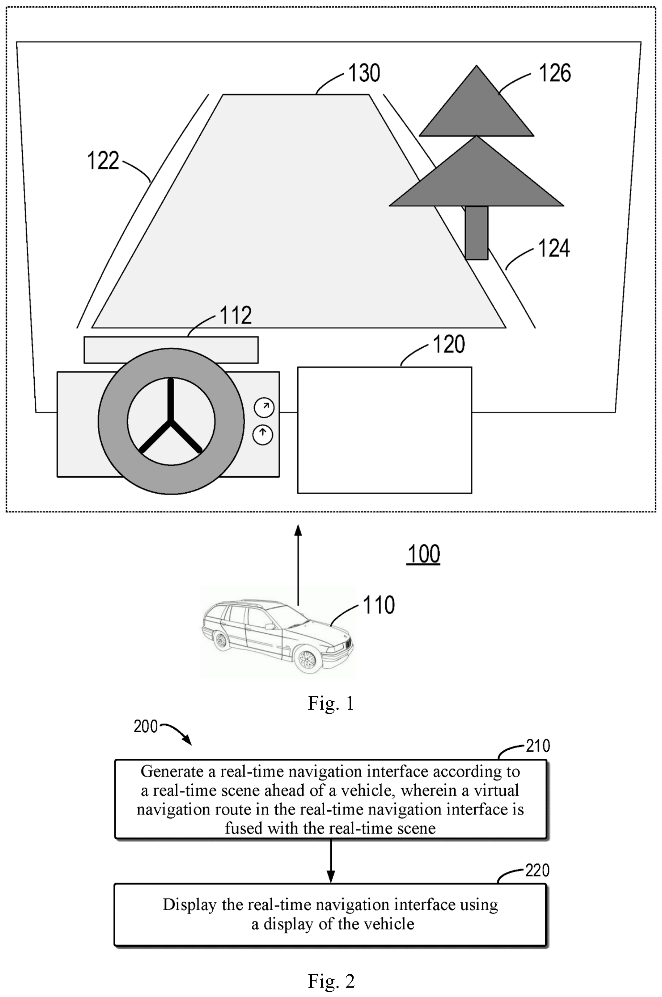

Fig. 1 illustrates a schematic diagram of an exemplary application scenario of a method for displaying navigation information according to embodiments of the present disclosure. In the embodiment, for convenience, a head-up display is used as an example of the display for description. However, it should be understood that this embodiment may also be applied to other displays, such as a central control display. As shown in Fig. 1, example environment 100 is shown as the interior of a vehicle 110, and includes a central control display 120 of a vehicle-mounted system (not shown in Fig. 1) and a head-up display 112 of the vehicle-mounted system. From a forward view of the interior, it can be seen that the vehicle 110 is traveling on a road formed by lane lines 122 and 124. There is a tree 126 on the road, which occupies a large portion of the view. In the embodiment, the method for displaying navigation information is performed by the vehicle-mounted system. This vehicle-mounted system may generate the navigation information and display it via the head-up display 112 in the forward view of the vehicle.

The vehicle-mounted system may utilize a camera (such as a front camera) equipped on the vehicle 110 to collect in real-time a real-time view or a real-time scene ahead of the vehicle 110, so as to generate real-time images. The front camera may continuously capture real-time images ahead of the vehicle at a high frame rate. These real-time images include current road conditions and other information that may affect driving, such as traffic signs, pedestrians, other vehicles, etc. In the embodiment, when the vehicle 110 traveling on the road bounded by lane lines 122 and 124, the vehicle-mounted system may analyze the real-time scene ahead of the vehicle, including but not limited to road features, position and size of surrounding objects, such as the tree 126 occupying a large portion of the view. In an embodiment, the vehicle-mounted system automatically detects and identifies a target road based on feature points in the image, such as lane lines and road edges.

In an embodiment, in addition to the camera, the vehicle may also be equipped with other types of sensors, such as infrared sensors, laser sensors, etc., for perceiving environmental information surrounding the vehicle. For example, sensors may be used to perceive a distance between a building ahead and the vehicle.

The vehicle-mounted system generates a real-time navigation interface fused with an actual scene based on the above information. In an embodiment, rendering of the navigation interface does not only rely on basic navigation information and images but also selects multiple display resources from a preset target resource library. The display resources may be pre-designed icons, symbols, color schemes, etc., which can be associated with specific navigation information to enhance expressiveness and accuracy of the real-time navigation interface.

A virtual navigation route in the real-time navigation interface is designed to be as close as possible to actual road conditions to enhance user perception and understanding. As shown in Fig. 1, a generated virtual navigation route 130 has a length almost consistent with a length of the road (bounded by lane lines 124 and 126), allowing the user to preview content of upcoming driving route. Furthermore, through highlighting, the user can easily notice the virtual navigation route 130 from a plurality of pieces of information. In addition, the virtual navigation route 130 and the tree 126 are fused to realize virtual-reality fusion; a part of the virtual navigation route 130 occluded by the tree 126 is not displayed, thereby preventing any confusion for the user. In an embodiment, additional navigation information also be displayed based on displaying the virtual navigation route 130. For example, in a near-large-far-small manner, attribute information of nearby buildings and vehicle logo information on the road may be displayed, etc. In an embodiment, a head-up display of the vehicle may be used for displaying a destination identifier in real time, and a display position of the destination identifier is a schematic representation of a geographical position of the destination relative to a current geographical position of the vehicle. It can allow the user to understand relative position information of the destination in real time during driving.

In an embodiment, the user may interact with the system in various ways, such as providing real-time feedback or modifying navigation settings via entering directional commands by a keyboard on a steering wheel, voice commands, or touchscreen operations on the central control display.

To improve driving safety, the method can fully utilize the real-time scene ahead of the vehicle, the head-up display 112 or other displays can be used to display the virtual navigation route 130 of a certain length to the user. It not only allows the user to anticipate an upcoming driving route but also enhances realism and comprehensibility of the navigation information through the virtual-reality fusion, which effectively improves driving experience and safety.

In an embodiment, the user may interact with the system in various ways, such as providing real-time feedback or modifying navigation settings via entering directional commands by a keyboard on a steering wheel, voice commands, or touchscreen operations on the central control display. These user interactions can be immediately translated into updates to the real-time navigation interface, ensuring that the navigation information remains up-to-date and aligned with needs of the user.

In an embodiment, in addition to basic navigation functions, the vehicle-mounted system may also integrate an intelligent warning mechanism. For example, when a sudden brake or traffic accident is detected ahead, the vehicle-mounted system displays a warning message on the head-up display, and advises the user to slow down or change lanes.

It should be understood that the various examples described above are not intended to be limiting but are only exemplarily shown for a purpose of aiding understanding, and the embodiments of the present disclosure are not limited to the various examples described above.

The schematic diagram of an example environment 100 in which the method and/or the process according to embodiments of the present disclosure may be implemented has been described above with reference to Fig. 1. A flowchart of a method 200 for displaying navigation information according to embodiments of the present disclosure is described below with reference to Fig. 2.

Fig. 2 illustrates a flowchart of a method for displaying navigation information according to embodiments of the present disclosure. The shown method 200 may be implement in the vehicle-mounted system shown in Fig. 1. As shown in Fig. 2, the method for displaying navigation information according to embodiments of the present disclosure includes block 210 and block 220.

At block 210, a real-time navigation interface is generated according to a real-time scene ahead of a vehicle, where a virtual navigation route in the real-time navigation interface is fused with the real-time scene. The real-time scene refers to actual environment ahead of the vehicle, and may include road conditions, buildings, other vehicles, pedestrians, etc. The virtual navigation route is not an indication of driving direction but rather a segment of a virtual driving route, for example, if there is 50 meters of visibility ahead of the vehicle, the virtual navigation route may be a suggested route for approximately 50 meters ahead of the vehicle (as shown by the virtual navigation route 130 in Fig. 1). Generating the real-time navigation interface may use computing resources (such as a processor of the vehicle-mounted system) to process the above real-time scene data and combine it with pre-planned navigation information to create a dynamically updated navigation interface. The virtual navigation route fused with the real-time scene indicates that the vehicle-mounted system does not merely provide a direction indication but overlays virtual navigation guidance (such as a suggested driving route etc.) directly onto an actual road view. Such design allows the user to more intuitively understand how to drive next, as the navigation guidance appears to exist in the real world. This virtual-reality fusion enhances immersion and trust of the user, contributing to improved driving safety.

At block 220, the real-time navigation interface is displayed using a display of the vehicle. The display may be various types of displays configured on the vehicle, such as a central control display or a head-up display. The head-up display is typically positioned below the front windshield in front of a line of sight of the driver. The head-up display can enable the driver to view the navigation information, such as speed, warning signals, and virtual navigation routes, without shifting the sight. Since the virtual navigation route in the real-time navigation interface is closely fused with the real-world scene, the driver can easily anticipate the upcoming driving route through the display.

According to the method provided in the embodiments of the present disclosure, the real-time scene ahead of the vehicle can be fully used, the display can be used for displaying the virtual navigation route of a certain length, so as to allow the user to anticipate the driving route in a short term, thereby improving driving safety. Furthermore, the method can further fuse the virtual navigation route with the real-time scene to realize virtual-reality fusion, thereby providing a more realistic and understandable navigation manner, and enhancing driving safety.

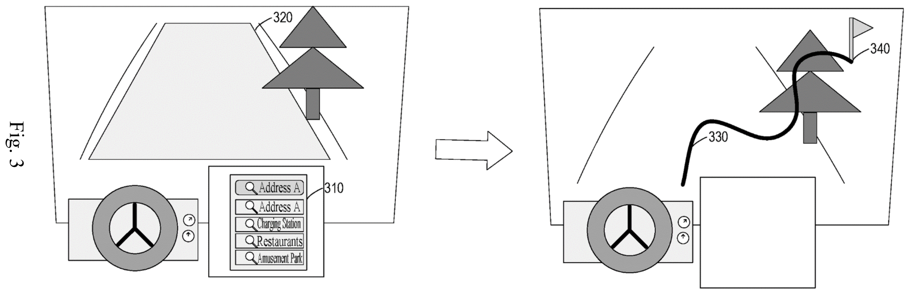

Fig. 3 illustrates a schematic diagram of updating a navigation interface according to embodiments of the present disclosure. In an embodiment, a user utilizes a head-up display to display a virtual navigation route 320 in a real-time navigation interface. If the user wants to change a destination at this time, the navigation information needs to be updated. In the embodiment, the user may input a user input via a central control display, where the user input includes destination information. For example, after inputting an address A, the central control display may display content related to the user input, such as displaying a position of the address A on a global map, displaying charging stations near the address A, restaurants near the address A, amusement parks near the address A, etc. After triggering any option, the user may use the head-up display via the front windshield to display a corresponding search result in front of the vehicle, allowing the user to understand related content more intuitively.

In an embodiment, if the user selects to display the position of the address A on the global map, the vehicle-mounted system may determine a relative position of the destination information relative to the vehicle based on the position information of the vehicle. For example, the position of the vehicle and the position of the address A can be determined via the Global Positioning System, and then a direction and distance of the address A relative to the vehicle can be determined.

In an embodiment, a display of the vehicle includes the head-up display, and the head-up display of the vehicle is used to display the relative position on the real-time navigation interface. This display may be schematic, allowing the user to roughly understand what is the profile of a virtual navigation route 330 (e.g., an S-shaped route) when travelling to the address A, which helps the user pre-understand driving information. Thar is, it can not only display a virtual navigation route in front of the vehicle but also display a global navigation route according to user needs, allowing the user to understand the overall route, local long-term route, etc.

In an embodiment, based on captured real-time images, the head-up display of the vehicle may be used to display multiple other information elements on the real-time navigation interface. For example, after using various sensors on the vehicle to perceive environment information surround the vehicle, attributes of buildings (e.g., restaurants, shops, supermarkets, public restrooms, etc.) near the vehicle may be displayed, and information such as road signs near the vehicle may be displayed. For some information elements, the user may interact with them. For example, it may display a building near the vehicle as X restaurant. The user selects the X restaurant (e.g., via voice control) to learn about specific rating of the X restaurant. As another example, it may display a building near the vehicle as Y supermarket. The user may select the Y supermarket (e.g., via voice control) to learn about which products are currently being sold at the Y supermarket.

In some other embodiments, if the user chooses to display the address A on the head-up display, the vehicle-mounted system may not display abstract address position information but instead display high-definition landscape images of the address A, thereby helping the user understand scenic information of the address A. In an embodiment, after the user drives near the destination (e.g., address A), the head-up display of the vehicle may be used to present the high-definition landscape images of the address A, allowing the user to quickly know that they are about to reach the destination.

In some other embodiments, the user may not interact by touching the center control display but through other more convenient manners. For example, the user may provide interaction via a voice module, in which case the user does not need to look at the center control display and may directly speak commands.

During navigation, to precisely fuse the virtual navigation route with the real-time scene, the real-time navigation interface may be continuously updated. In an embodiment, a navigation module is used to generate navigation information. The navigation module is a part within the backend of the vehicle-mounted system responsible for generating route planning and navigation guidance data. The navigation module may be an internal hardware component or software algorithm, or a service connected to a cloud server via the Internet. A task of the navigation module is to calculate an optimal route based on a starting point, destination, and possible waypoints, and generate corresponding navigation guidance, such as the virtual navigation route, turn signal, etc.

In an embodiment, images ahead of the vehicle is captured by a camera, where the images includes the real-time scene. The camera device described above is used for continuously capture the images ahead of the vehicle at a certain frequency (e.g., 30 frames per second). These images are real-time, reflecting current road conditions and other dynamic elements (such as other vehicles, pedestrians, and other dynamic objects, as well as static objects like buildings and trees), constituting the real-time scene. In an embodiment, the real-time navigation interface is generated based on the navigation information and the image. Through the embodiments, the virtual navigation route can be fused with the real-time scene in real time, thereby improving navigation accuracy and driving safety.

In an embodiment, the image includes an image of a target road, and the target road is detected based on the image. The target road refers to that part of a road directly related to route planning, such as a road segment for an upcoming turn or a specific lane to be entered by the driver. The vehicle-mounted system may analyze the images captured from the camera, identify features like road boundaries and lane lines, thereby determining which part is the target road for current drive. For example, computer vision techniques such as edge detection, color recognition, shape matching, etc., may be used to accurately capture a position and shape of the target road.

In an embodiment, if the target road conforms to the navigation information (e.g., conforms to the route planning), a first virtual route is generated by a navigation component, where the first virtual route represents the target road. In an embodiment, the first virtual route is highlighted as the virtual navigation route. For example, the virtual navigation route 130 shown in Fig. 1 is a virtual route subjected to highlighting, which helps increase the user's attention to the virtual navigation route.

In an embodiment, the image includes a target object (e.g., the tree 126 as shown in Fig. 1), the navigation information includes a second virtual route, and if a target portion of the second virtual route is occluded by the target object, the target portion of the second virtual route is deleted to serve as the virtual navigation route. This can create a visual effect where the virtual navigation route is occluded by the target object, making the fusion of the virtual navigation route with the real-time scene more accurate.

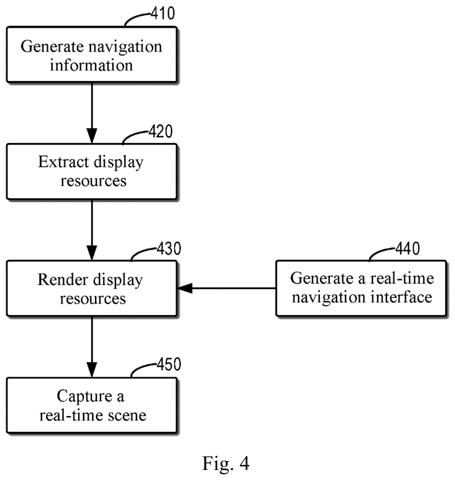

Fig. 4 illustrates a schematic diagram of generating a real-time navigation interface according to embodiments of the present disclosure. As shown in Fig. 4, at 410, the navigation information is generated using a navigation module in the background, the navigation information includes computing data for generating the virtual navigation route, driving time and others. At 420, display resources for navigation are extracted. To achieve rendering of the real-time navigation interface, multiple display resources may be selected from a preset target resource library, such as icons, symbols, color schemes, etc., which is associated with specific navigation information to enhance expressiveness and accuracy of the navigation interface. At 440, the real-time scene is captured. For example, a camera in front of the vehicle may be used to capture the real-time scene when generating the real-time navigation interface. At 430, the navigation information is fused with objects and roads in the real-time scene to obtain the virtual navigation route of virtual-reality fusion, and by for example, setting text boxes to present text data, arranging navigation components to present the virtual navigation route, etc., the rendering of navigation resources is completed. At 450, the real-time navigation interface is generated and the head-up display is used to display the real-time navigation interface.

In the embodiment, by combining pre-calculated navigation information with the real scene captured during vehicle travel, a head-up display method with an augmented reality (AR) style is created. This method not only improves the accuracy of navigation guidance but also enhances safety and convenience of the user experience.

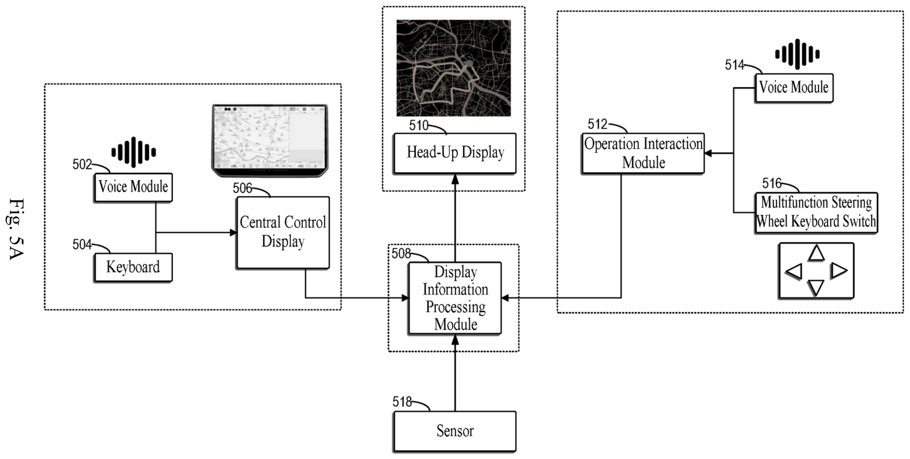

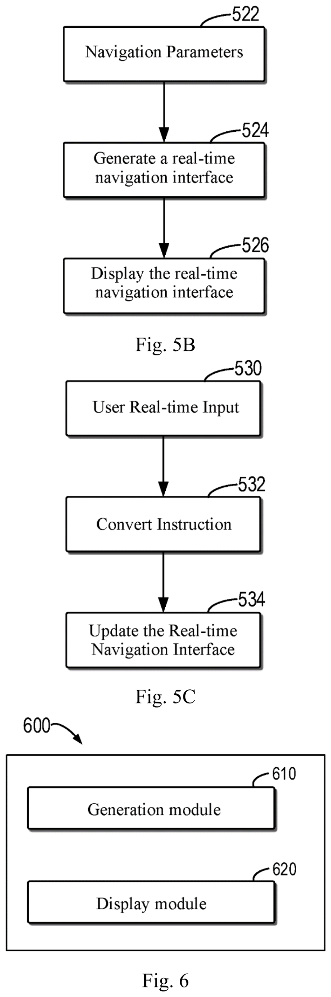

Fig. 5A illustrates a schematic diagram of a system for displaying navigation information according to embodiments of the present disclosure. In the embodiment, the user may use a keyboard 504 provided by a central control display to input a navigation destination, and then a navigation module generates navigation information based on the user input. Alternatively, the user may use a voice module 502 to input the destination in a voice manner. Fig. 5B illustrates a schematic diagram of generating a real-time navigation interface according to embodiments of the present disclosure. At 522, a central control display 506 may transmit user input and navigation parameters (e.g., navigation path) to a display information processing module 508. The display information processing module 508 may additionally receive an image from a sensor 518, the image indicating the real-time scene ahead of the vehicle. The sensor 518 may include various types of sensors for perceiving environment information surround the vehicle. At 524, the display information processing module 508 may extract display resources for navigation at local. For example, icons, symbols, color schemes, etc., these may be associated with specific navigation information to enhance expressiveness and accuracy of the navigation interface. The display information processing module 508 can fuse the navigation information with objects and roads in the real-time scene to obtain the virtual navigation route of virtual-reality fusion, and complete the rendering of navigation resources, thereby generating the real-time navigation interface.

At 526, the display information processing module 508 may send the generated real-time navigation interface to a head-up display 510. The head-up display 510 may first display an overall navigation path, allowing the user to have a general understanding of the overall driving travel, and when the vehicle starts moving, display the real-time navigation interface, thereby facilitating the user to refer to the virtual navigation route in real-time during driving.

During driving, the user may adjust the real-time navigation interface at any time. In an embodiment, if real-time interaction of the user is received, the display information processing module 508 may update the real-time navigation interface based on the real-time interaction of the user. Fig. 5C illustrates a schematic diagram of adjusting a real-time navigation interface according to embodiments of the present disclosure. At 530, the real-time interaction of the user is received from the user. For example, voice information may be received from the user through a voice module 514, as the real-time interaction of the user. For example, touch screen input may be received from the central control display of the vehicle, as the real-time interaction of the user. As another example, if a steering wheel of the vehicle is equipped with a multifunction steering wheel keyboard switch 516, then via the multifunction steering wheel keyboard switch 516, key input is received from the user as the real-time interaction of the user, where the key input includes at least one of an up key, a down key, a left key, and a right key.

At 532, an operation interaction module 512 may convert the real-time interaction of the user into an instruction for the real-time navigation interface. For example, the instruction may be to change a currently used virtual navigation route to another candidate virtual navigation route. At 534, the operation interaction module 512 may send the instruction to the display information processing module 508, and the display information processing module 508 generates a second navigation interface based on the instruction to update the real-time navigation interface. In the embodiment, a system is allowed to receive the real-time interaction of the user and update the real-time navigation interface based on the real-time interaction of the user. The display information processing module 508 may send the real-time navigation interface to the head-up display 510 for display. This means the system can instantly reflect operation intent or changing needs of the user, and provides more personalized and dynamic navigation services.

Fig. 6 illustrates a schematic diagram of an apparatus 600 for displaying navigation information according to embodiments of the present disclosure. The apparatus 600 includes a generation module 610 and a display module 620. The generation module 610 is configured to generate a real-time navigation interface according to a real-time scene ahead of a vehicle, where a virtual navigation route in the real-time navigation interface is fused with the real-time scene. The display module 620 is configured to display the real-time navigation interface using a display of the vehicle.

In an embodiment, the vehicle is equipped with a camera, and the generation module 610 includes a second generation module configured to generate navigation information using a navigation module. The generation module 610 further includes an acquisition module configured to acquire an image ahead of the vehicle using the camera, where the image includes the real-time scene. The generation module 610 further includes a third generation module configured to generate the real-time navigation interface based on the navigation information and the image.

In an embodiment, the image includes an image of a target road, and the third generation module includes a detection module configured to detect the target road based on the image. The third generation module further includes a fourth generation module configured to, in response to the target road matching the navigation information, generate a first virtual route using a navigation component, where the first virtual route represents the target road. The third generation module further includes a highlighting module configured to highlight the first virtual route as the virtual navigation route.

In an embodiment, the image includes a target object, the navigation information includes a second virtual route, and the third generation module further includes a deletion module configured to, in response to a target portion of the second virtual route being occluded by the target object, delete the target portion of the second virtual route as the virtual navigation route.

In an embodiment, the third generation module further includes a first acquisition module configured to acquire a plurality of display resources from a target resource library according to the navigation information, where the plurality of display resources are associated with the navigation information. The third generation module further includes a rendering module configured to render the plurality of the display resources based on the navigation information and the image to generate the real-time navigation interface.

In an embodiment, the display includes a head-up display, the apparatus 600 further includes a first receiving module configured to receive a user input including destination information. The apparatus 600 further includes a first determination module configured to determine a relative position of the destination information relative to the vehicle based on position information of the vehicle. The apparatus 600 further includes a second determination module configured to display the relative position on the real-time navigation interface using the heads-up display.

In an embodiment, the apparatus 600 further includes a first update module configured to, in response to receiving a real-time user interaction, update the real-time navigation interface according to the real-time user interaction.

In an embodiment, the first update module includes a second receiving module configured to receive the real-time user interaction from a user. The first update module further includes a conversion module configured to convert the real-time user interaction into an instruction for the real-time navigation interface. The first update module includes a fourth generation module configured to generate a second navigation interface according to the instruction to update the real-time navigation interface.

In an embodiment, a keyboard is deployed in a steering wheel of the vehicle, and the second receiving module includes a third receiving module configured to receive a key input from the user via the keyboard as the real-time user interaction, where the key input includes at least one of an up key, a down key, a left key, or a right key.

In an embodiment, the second receiving module includes a fourth receiving module configured to receive voice information from the user as the real-time user interaction.

In an embodiment, the second receiving module includes a fifth receiving module configured to receive a touchscreen input from a central control display of the vehicle as the real-time user interaction.

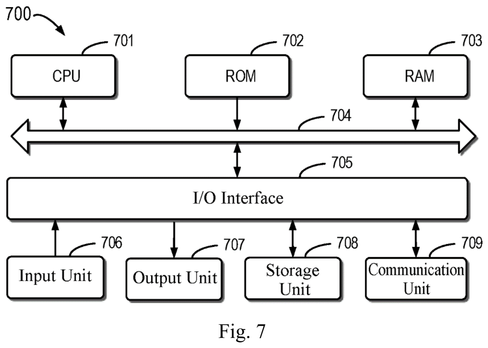

Fig. 7 illustrates a block diagram of a device 700 that can implement some embodiments of the present disclosure. The device 700 can be the device or apparatus described in the embodiments of the present disclosure. As shown in Fig. 7, the device 700 includes a central processing unit (CPU) 701 which performs various appropriate actions and processing, based on computer program instructions stored in a Read-Only Memory (ROM) 702 or computer program instructions loaded from a storage unit 708 to a Random Access Memory (RAM) 703. The RAM 703 stores therein various programs and data required for operations of the device 700. The CPU 701, the ROM 702 and the RAM 703 are connected via a bus 704 with one another. An input/output (I/O) interface 705 is also connected to the bus 704.

A plurality of components in the device 700 are connected to the I/O interface 705, include: an input unit 706 such as a keyboard, a mouse and the like; an output unit 707 including various kinds of displays and a loudspeaker, etc.; a storage unit 708 including a magnetic disk, an optical disk, and etc.; a communication unit 709 including a network card, a modem, and a wireless communication transceiver, etc. The communication unit 709 allows the device 700 to exchange information/data with other devices through a computer network such as the Internet and/or various kinds of telecommunications networks.

The CPU 701 may execute various methods and processes described above. For example, in some embodiments, the method may be implemented as computer software programs that are tangibly included in a machine readable medium, e.g., the storage unit 708. In some embodiments, part or all of the computer programs may be loaded and/or mounted onto the device 700 via ROM 702 and/or communication unit 709. When the computer program is loaded to the RAM 703 and executed by the CPU 701, one or more steps or operations of the method or processes as described above may be executed.

In some embodiments, the methods and processes described above may be implemented as a computer program product. The computer program product may include a computer-readable storage medium having computer-readable program instructions for executing various aspects of the present disclosure.

The computer-readable storage medium may be a tangible device that can retain and store instructions used by an instruction execution device. The computer-readable storage medium may be, for example, but is not limited to, an electrical storage device, a magnetic storage device, an optical storage device, an electromagnetic storage device, a semiconductor storage device, or any suitable combination of the above. More specific examples (a non-exhaustive list) of computer-readable storage media include: portable computer disks, hard disks, random access memory (RAM), read-only memory (ROM), erasable programmable read-only memory (EPROM or flash memory), static random access memory (SRAM), portable compact disc read-only memory (CD-ROM), digital versatile disc (DVD), memory sticks, floppy disks, mechanically encoded devices such as punch cards or raised structures in grooves with instructions stored thereon, and any suitable combination of the above. The computer-readable storage medium used herein is not to be interpreted as a transient signal itself, such as radio waves or other freely propagating electromagnetic waves, electromagnetic waves propagating through waveguides or other transmission media (e.g., light pulses through fiber optic cables), or electrical signals transmitted through wires.

The computer-readable program instructions described herein may be downloaded from the computer-readable storage medium to various computing/processing devices, or downloaded via a network, such as the Internet, a local area network, a wide area network, and/or a wireless network, to an external computer or external storage device. The network may include copper transmission cables, fiber optic transmission, wireless transmission, routers, firewalls, switches, gateway computers, and/or edge servers. A network adapter card or network interface in each computing/processing device receives the computer-readable program instructions from the network and forwards the computer-readable program instructions for storage in a computer-readable storage medium within each computing/processing device.

The computer program instructions for carrying out operations of the present disclosure may be assembly instructions, instruction-set-architecture (ISA) instructions, machine instructions, machine-dependent instructions, microcode, firmware instructions, state-setting data, or either source code or object code written in any combination of one or more programming languages, including an object oriented programming language and conventional procedural programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

These computer readable program instructions may be provided to a processor of a general purpose computer, special purpose computer, or other programmable data processing apparatus to produce a machine, such that the instructions, when executed by the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein includes an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions, when executed on the computer, other programmable apparatus, or other device, implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present disclosure. In this regard, each block in the flowchart or block diagrams may represent a module, segment, or portion of instructions, which includes one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

Embodiments of the present disclosure have been described above. The above description is illustrative and not exhaustive, and is not limited to the disclosed embodiments. The terminology used herein was chosen to best explain the principles of the embodiments, the practical application or technical improvement over technologies found in the marketplace, or to enable others of ordinary skill in the art to understand the embodiments disclosed herein.

## Claims

1. A method for displaying navigation information, comprising:
generating (210) a real-time navigation interface according to a real-time scene ahead of a vehicle, wherein a virtual navigation route in the real-time navigation interface is fused with the real-time scene; and
displaying (220) the real-time navigation interface using a display of the vehicle.

2. The method according to claim 1, wherein the vehicle is equipped with a camera, and generating (210) the real-time navigation interface according to the real-time scene ahead of the vehicle comprises:
generating navigation information using a navigation module;
acquiring an image ahead of the vehicle using the camera, wherein the image comprises the real-time scene; and
generating the real-time navigation interface based on the navigation information and the image.

3. The method according to claim 2, wherein the image comprises an image of a target road, and generating the real-time navigation interface based on the navigation information and the image comprises:
detecting the target road based on the image;
in response to the target road matching the navigation information, generating a first virtual route using a navigation component, wherein the first virtual route represents the target road; and
highlighting the first virtual route as the virtual navigation route.

4. The method according to claim 3, wherein the image comprises a target object, the navigation information comprises a second virtual route, and generating the real-time navigation interface based on the navigation information and the image further comprises:
in response to a target portion of the second virtual route being occluded by the target object, deleting the target portion of the second virtual route as the virtual navigation route.

5. The method according to claim 2, 3 or 4, wherein the generating the real-time navigation interface based on the navigation information and the image comprises:
acquiring a plurality of display resources from a target resource library according to the navigation information, wherein the plurality of display resources are associated with the navigation information; and
rendering the plurality of the display resources based on the navigation information and the image to generate the real-time navigation interface.

6. The method according to any of the preceding claims, wherein the display comprises a heads-up display, and the method further comprises:
receiving a user input comprising destination information;
determining a relative position of the destination information relative to the vehicle based on position information of the vehicle; and
displaying the relative position on the real-time navigation interface using the heads-up display.

7. The method according to any of the preceding claims, further comprising:
in response to receiving a real-time user interaction, updating the real-time navigation interface according to the real-time user interaction.

8. The method according to claim 7, wherein updating the real-time navigation interface according to the real-time user interaction comprises:
receiving the real-time user interaction from a user;
converting the real-time user interaction into an instruction for the real-time navigation interface; and
generating a second navigation interface according to the instruction to update the real-time navigation interface.

9. The method according to claim 8, wherein a keyboard is deployed in a steering wheel of the vehicle, and receiving the real-time user interaction from the user comprises:
receiving a key input from the user via the keyboard as the real-time user interaction, wherein the key input comprises at least one of an up key, a down key, a left key, or a right key.

10. The method according to claim 8, wherein receiving the real-time user interaction from the user comprises:
receiving voice information from the user as the real-time user interaction.

11. The method according to claim 8, wherein receiving the real-time user interaction from the user comprises:
receiving a touchscreen input from a central control display of the vehicle as the real-time user interaction.

12. An electronic device (700), comprising:
a processor (701); and
a memory (702, 703) coupled to the processor and having instructions stored thereon, wherein the instructions, when executed by the processor, cause the electronic device to implement the method of any of claims 1 to 11.

13. A computer-readable storage medium (708) having computer-executable instructions stored thereon, wherein the computer-executable instructions, when executed, cause a computer to implement the method according to any of claims 1 to 11.

14. A computer program product tangibly stored on a non-transitory computer readable medium (708) and comprising machine executable instructions that, when executed, cause a machine to implement the method according to any of claims 1 to 11.
